# DEMANDE DE BREVET EUROPEEN

(11) **EP 4 340 313 A1**
(43) Date de publication de la demande: **20.03.2024**
(21) Numéro de dépôt: 23197081.5
(22) Date de dépôt: 13.09.2023
(51) Int. Cl.: H04L 41/28, G06F 9/455, G06F 21/53, H04L 41/40, H04L 9/40, G06F 21/62

(54) **MACHINE VIRTUELLE DE CONFIANCE AVEC AUTORISATION EXCEPTIONNELLE D' ACCÈS À DES RESSOURCES INTERDITES**

(30) Priorité: 13.09.2022 FR 2209171
(71) Demandeur: THALES, 92400 Courbevoie (FR)
(72) Inventeur: VIGNERAS, Patrick, 92622 GENNEVILLIERS CEDEX (FR); MOYNE, Thibault, 33700 MERIGNAC (FR); LEMEUNIER, Pierric, 92622 GENNEVILLIERS CEDEX (FR); JUGUET, Pierre-Alexandre, 92622 GENNEVILLIERS CEDEX (FR)
(74) Mandataire: Lavoix

(57) **Abrégé**

Cette infrastructure logicielle de virtualisation (4) permet d'accueillir une pluralité de machines virtuelles (8, 10) sur un serveur informatique (6), et comporte une couche logicielle de virtualisation (12) formant un environnement d'exécution pour les machines virtuelles.

La couche logicielle de virtualisation (12) est configurée pour autoriser sélectivement au moins une des machines virtuelles, dite machine virtuelle de confiance (10), à accéder directement à au moins une ressource du serveur informatique, les autres machines virtuelles (8) n'étant pas autorisées à accéder directement aux ressources matérielles (7) du serveur informatique (6), et ne pouvant accéder qu'à des ressources correspondantes virtualisées par l'intermédiaire de la couche logicielle de virtualisation (12).

## Description

### DOMAINE TECHNIQUE

L'invention concerne le domaine de la virtualisation de systèmes réseaux et de télécommunications.

L'invention concerne plus particulièrement la virtualisation de fonctions réseaux et l'accès à des ressources logicielles ou matérielles par celles-ci (« *Network functions virtualization* », ou NFVi, comme définies par la norme ETSI GS NFV-006 de l'European Télécommunications Standards Institute - ETSI).

### ART ANTERIEUR

De façon connue, les solutions techniques pour virtualiser des fonctions réseau dans des systèmes d'information, notamment selon l'architecture NFVi de l'ETSI (European Télécommunications Standard Institut), permettent de déployer des fonctions réseau ou de sécurité ou communications sous la forme de logiciel plutôt que sous la forme de matériel propriétaire. Ces fonctions réseau peuvent correspondre à des fonctionnalités réalisées par des routeurs, des pare-feux, des systèmes d'analyse de trafic réseaux ou de détection d'attaque réseau, et bien d'autres exemples encore. Ces différentes fonctions (VNF au sens ETSI) peuvent ainsi être réalisées par des machines virtuelles regroupées sur une seule machine physique pour la factorisation de l'empreinte matérielle et l'adaptabilité du matériel au contexte d'environnement (choix d"un matériel durci par exemple). Cette virtualisation s'opère sur un serveur informatique banalisé d'architecture type x86 64 bit par exemple. Cela permet de faire évoluer à distance ces fonctions en machine virtuelle sans être obligé de changer systématiquement le matériel sous-jacent.

Cette solution présente néanmoins des inconvénients.

En effet, la virtualisation réseau définie par l'architecture ETSI NFVi autorise en principe l'accès libre aux ressources logicielles et matérielles du serveur informatique sous-jacent. Par exemple, une machine virtuelle peut généralement accéder à des ressources matérielles telles que des pages mémoire, des interfaces de communication telles que des ports USB (Universal Serial Bus), et ainsi de suite. Cet accès à des ressources matérielles ou logicielles par une machine virtuelle malicieuse pourrait rentrer en concurrence indésirable avec une autre machine virtuelle utilisant cette même ressource au risque d'exploiter une vulnérabilité de sécurité.

Cependant, les principes de conception sécurisée de systèmes d'information actuels amènent le plus souvent à ségréger et cloisonner les ressources matérielles et logicielles de la machine physique sous-jacente. Ainsi, une page mémoire doit être exclusive à une machine virtuelle et ainsi inaccessible par les autres machines. Un contrôleur USB ne doit pas être partagé entre plusieurs machines virtuelles, et ainsi de suite. Ces ressources doivent être alors rendues accessibles ou inaccessibles au moyen d'un mécanisme de contrôle d'accès. Ces règles de sécurité à appliquer sont définies par les autorités nationales comme l'ANSSI pour la règlementation française, et par les Instructions Ministérielles pour les Systèmes d'information Français.

Or, ces règles de sécurité sont très contraignantes, voire impossible, à mettre en oeuvre dans certains systèmes, comme par exemple dans le cas de systèmes d'information complexes utilisés dans des environnements contraints ou difficiles, pour lesquels la surveillance opérationnelle par des administrateurs qualifiés peut être faible ou absente, ou que les utilisateurs ne sont pas autorisés à modifier certaines configurations au risque de perdre l'homologation de sécurité d'un système.

Cela peut par exemple concerner des systèmes informatiques qui sont déployés dans des environnements distants, par exemple dans le cadre d'opérations militaires ou sur des sites géographiquement reculés.

Dans ce contexte d'utilisation, il est souhaitable de mettre en oeuvre une solution de sécurité afin d'offrir une capacité d'accès direct à une ressource matérielle ou logicielle depuis une machine virtuelle tout en étant conforme aux recommandations de sécurité, et ainsi bénéficier des avantages apportés par la virtualisation dans des systèmes d'information.

### RESUME DE L'INVENTION

C'est à ces inconvénients qu'entend plus particulièrement remédier l'invention en proposant une infrastructure de virtualisation permettant d'accueillir de façon sécurisée une machine virtuelle souhaitant un accès privilégié à au moins une ressource à accès limité.

A cet effet, un aspect de l'invention concerne une infrastructure logicielle de virtualisation pour accueillir une pluralité de machines virtuelles sur un serveur informatique. L'infrastructure de virtualisation comporte une couche logicielle de virtualisation formant un environnement d'exécution pour les machines virtuelles et est configurée pour autoriser sélectivement au moins une des machines virtuelles, dite machine virtuelle de confiance, à accéder directement, voire exclusivement, à au moins une ressource du serveur informatique. Les autres machines virtuelles ne sont pas autorisées à accéder directement aux ressources matérielles du serveur informatique, et ne peuvent accéder qu'à des ressources correspondantes virtualisées par l'intermédiaire de la couche logicielle de virtualisation.

De préférence, elles y accèdent successivement et si et seulement si elles y sont autorisées par l'intermédiaire de la couche logicielle de virtualisation.

Selon des aspects avantageux mais non obligatoires, un tel système informatique peut incorporer une ou plusieurs des caractéristiques suivantes, prises isolément ou suivant toute combinaison techniquement admissible :
- ladite au moins une ressource du serveur informatique est une ressource matérielle ou logicielle et comporte un ou plusieurs des éléments suivants : un port de communication, un contrôleur USB, une interface réseau, un générateur d'aléa, un module matériel de sécurité, une carte d'extension, un modem, une carte d'acquisition de données, un récepteur de géolocalisation, un processeur graphique, un processeur spécialisé de traitement de signal ;
- ladite au moins une ressource du serveur informatique est un module de gestion de l'infrastructure de virtualisation ;
- la ou les ressources du serveur informatique auxquelles la machine virtuelle de confiance peut être autorisée à accéder directement lors de son exécution par l'infrastructure de virtualisation sont identifiées par des données d'identification;
- les données d'identification associées à la machine virtuelle de confiance ne sont pas modifiables lors de l'exécution des machines virtuelles,
   lesdites données d'identification étant de préférence modifiables seulement lors de la production logicielle, c'est-à-dire lors de la création des machines virtuelles ;
- la couche logicielle de virtualisation est configurée pour virtualiser au moins une fonction parmi des fonctions réseau, des fonctions de sécurité, et des fonctions de communication sur le serveur informatique.

Selon un autre aspect, l'invention concerne un produit programme d'ordinateur comportant un code informatique ou des instructions machine exécutables configuré pour, lorsqu'exécuté par un processeur d'un serveur informatique, mettre en oeuvre une infrastructure logicielle de virtualisation telle que décrite ci-dessus.

Selon un autre aspect, l'invention concerne un système informatique comportant un serveur informatique et une infrastructure logicielle de virtualisation telle que décrite ci-dessus.

Selon un autre aspect, l'invention concerne un procédé de déploiement d'une machine virtuelle dite de confiance dans une infrastructure de virtualisation telle que décrite ci-dessus, le procédé comportant des étapes consistant à :
- par un outil informatique de conception d'un intégrateur, recevoir des informations d'identification qui identifient une ou plusieurs ressources d'un serveur informatique auxquelles la machine virtuelle de confiance peut être autorisée à accéder directement, et voire exclusivement, lors de son exécution par l'infrastructure de virtualisation ;
- par un outil informatique de conception, créer ladite machine virtuelle, la machine virtuelle de confiance créée comportant les informations d'identification reçues ;
- par un outil informatique d'un administrateur du serveur informatique, recevoir la machine virtuelle créée et installer sur le serveur informatique la machine virtuelle de confiance créée, l'infrastructure étant configurée pour, lors de l'exécution de la machine virtuelle de confiance, sélectivement autoriser la machine virtuelle de confiance à accéder directement, et voire exclusivement, à au moins une desdites ressources matérielles ou logicielles du serveur identifiées par les informations d'identification.

Selon un autre aspect, l'invention concerne aussi un produit programme d'ordinateur comportant un code informatique ou des instructions machine exécutables configuré pour, lorsqu'exécuté par un processeur d'un serveur informatique, mettre en oeuvre un procédé de déploiement, tel que défini ci-dessus.

Selon un autre aspect, l'invention concerne également un procédé de gestion d'une pluralité de machines virtuelles sur un serveur informatique, le procédé étant mis en oeuvre par le serveur informatique et comprenant les étapes suivantes :
- créer une couche logicielle de virtualisation formant un environnement d'exécution pour les machines virtuelles ;
- autoriser sélectivement au moins une des machines virtuelles, dite machine virtuelle de confiance, à accéder directement à au moins une ressource du serveur informatique, les autres machines virtuelles n'étant pas autorisées à accéder directement aux ressources matérielles du serveur informatique, et ne pouvant accéder qu'à des ressources correspondantes virtualisées par l'intermédiaire de la couche logicielle de virtualisation ; et
- exécuter les machines virtuelles via la couche logicielle de virtualisation.

Selon un autre aspect, l'invention concerne aussi un produit programme d'ordinateur comportant un code informatique ou des instructions machine exécutables configuré pour, lorsqu'exécuté par un processeur d'un serveur informatique, mettre en oeuvre un procédé de gestion, tel que défini ci-dessus.

### BREVE DESCRIPTION DES DESSINS

L'invention sera mieux comprise et d'autres avantages de celle-ci apparaîtront plus clairement à la lumière de la description qui va suivre d'un mode de réalisation, donnée uniquement à titre d'exemple et faite en référence aux dessins annexés, dans lesquels :
- la figure 1 est un schéma synoptique d'un système informatique comportant une infrastructure logicielle de virtualisation selon un mode de réalisation de l'invention ; et
- la figure 2 est un diagramme d'un exemple de mise en oeuvre du système informatique de la figure 1 selon un mode de réalisation de l'invention.

### DESCRIPTION DETAILLEE D'UN MODE DE REALISATION

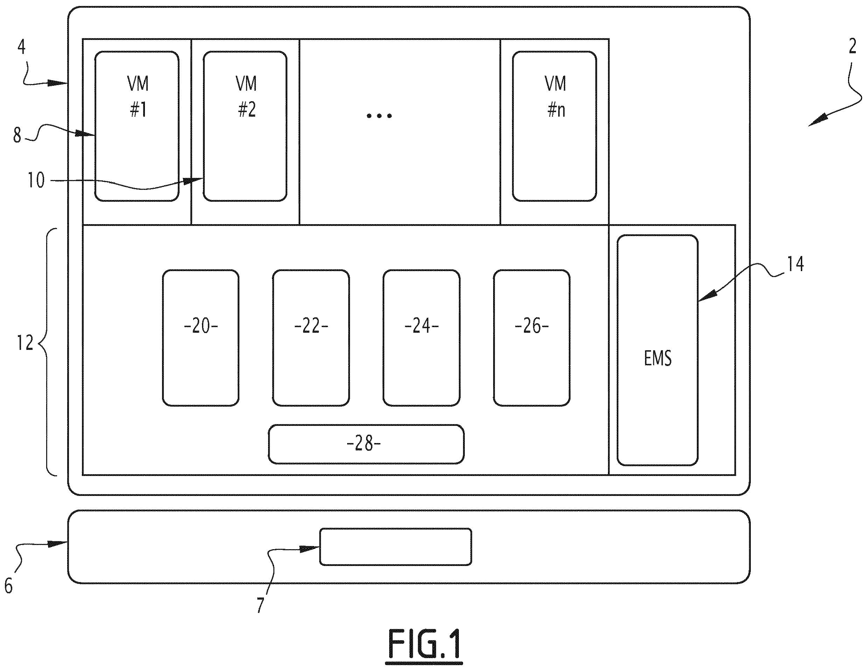

La figure 1 représente un exemple de système informatique 2.

Le système informatique 2 comporte une infrastructure logicielle de virtualisation 4 capable d'accueillir une ou plusieurs machines virtuelles.

Le système informatique 2 comporte également un serveur informatique 6 capable d'exécuter l'infrastructure logicielle de virtualisation 4.

Par exemple, le serveur 6 est un serveur « matériel » (Hardware server) comportant au moins un processeur, une mémoire, des moyens de stockage de données, et au moins une interface réseau, telle qu'une interface Ethernet.

Le processeur du serveur 6 est de type x86, ou x86-64, ou équivalent, cet exemple n'étant pas limitatif. En variante, le serveur 6 pourrait utiliser un processeur ayant une architecture de type ARM plutôt qu'une architecture x86.

De préférence, l'infrastructure logicielle de virtualisation 4 est mise en oeuvre par un programme informatique, tel qu'un code informatique ou des instructions machine exécutables, lorsque ce programme est exécuté par un processeur du serveur 6.

Le programme informatique est enregistré sur un support lisible par ordinateur, par exemple un disque optique, ou un disque magnéto-optique, ou une mémoire morte (ROM), ou une mémoire volatile (RAM), ou une mémoire non volatile (EPROM, EEPROM, FLASH, NVRAM), ou une carte magnétique ou optique, ou tout support équivalent. Le programme informatique est avantageusement enregistré de manière sécurisée sur le support lisible par ordinateur.

Le serveur 6 comporte une pluralité de ressources pouvant être accessibles par des programmes logiciels exécutés par le processeur. Ces ressources peuvent être des ressources matérielles, voire dans certains cas, des ressources logicielles, comme on le comprendra à la lecture de la description qui va suivre.

En particulier, le serveur 6 comporte une pluralité de ressources matérielles 7.

Au sens de la présente description, par « ressource matérielle », on désigne par exemple un périphérique matériel ou un élément matériel identifié par une adresse sur un bus de données interne, tel que le bus PCI (Peripheral Component Interconnect).

Les ressources matérielles 7 du serveur 6 peuvent, par exemple, comporter un ou plusieurs des éléments suivants, cette liste n'étant pas limitative :
- un contrôleur USB (Universal Serial Bus) ;
- une interface réseau, par exemple une interface Ethernet ;
- un générateur d'aléa, par exemple appartenant à un module sécurisé (TPM ou « Trusted Platform Module ») ;
- une carte d'extension, par exemple un modem ou une carte d'acquisition de données, ces exemples n'étant pas limitatifs ;
- un récepteur de géolocalisation (par exemple compatible avec le réseau Galileo ou le réseau GPS ou équivalent) ;
- un processeur graphique (GPU) ;
- un processeur spécialisé de traitement de signal (DSP).

L'infrastructure de virtualisation 4 est configurée pour accueillir une pluralité de machines virtuelles (notées VM sur la figure 1).

Dans l'exemple de la figure 1, les machines virtuelles sont numérotées de #1 à #n, où « n » est un nombre entier.

Parmi ces machines virtuelles, on distingue une pluralité de machines virtuelles 8 « standard » et une machine virtuelle 10 dite de confiance, correspondant à la machine virtuelle VM #2 dans l'exemple de la figure 1.

Dans ce qui suit, pour simplifier la description, on fera le plus souvent référence à une seule machine virtuelle 10 de confiance, mais la description peut être transposée à des mode de réalisation dans lesquels plusieurs machines virtuelles 10 de confiance sont installées sur l'infrastructure de virtualisation 4.

L'infrastructure de virtualisation 4 comporte un système d'exploitation 20 et une couche logicielle de virtualisation 12 formant un environnement d'exécution pour les machines virtuelles 8, 10.

L'infrastructure de virtualisation 4 peut également comporter des fonctionnalités de gestion (EMS pour Equipment Management System) permettant à un utilisateur, tel qu'un administrateur local, de superviser le fonctionnement de la couche logicielle de virtualisation 12. Ces fonctionnalités de gestion sont représentées par un module de gestion 14 sur la figure 1, le module de gestion 14 étant configuré pour mettre en oeuvre lesdites fonctionnalités de gestion.

Dans de nombreux modes de réalisation, la couche logicielle de virtualisation 12 comporte un hyperviseur 22.

De préférence, l'hyperviseur 22 est implémenté par un module du noyau du système d'exploitation, ce dernier pouvant être un système de type Unix ou de préférence Linux, ces exemples n'étant pas limitatifs.

Par exemple, les machines virtuelles 8 et 10 sont des machines virtuelles de type KVM (Kernel-based Virtual Machine). L'hyperviseur 22 peut également être au moins en partie implémenté par un hyperviseur de type QEMU, ce dernier étant de préférence couplé à un module KVM. D'autres implémentations sont néanmoins possibles, ces exemples étant donnés à titre illustratif.

Les machines virtuelles 8 et 10 peuvent, par exemple, se présenter sous la forme de fichiers d'image disque, par exemple un fichier image au format QCOW ou QCOW2 ou autre, qui sont chargées dans l'infrastructure de virtualisation 4. Là encore, d'autres implémentations sont possibles, ces exemples étant donnés à titre illustratif.

La couche logicielle de virtualisation 12 est également configurée pour virtualiser des fonctions réseau du serveur 6 et comporte à cet effet un module réseau 24. De préférence, cette virtualisation est réalisée conformément à l'architecture NFVi (« Network functions virtualization »), par exemple définie par les normes de l'ETSI, telle que la norme ETSI GS NFV-006 dans sa version en vigueur au jour du dépôt de la présente demande de brevet. D'autres implémentations sont néanmoins possibles, ces exemples étant donnés à titre illustratif.

Les machines virtuelles 8 dites « standard » ne sont pas autorisées à accéder directement aux ressources matérielles 7 du serveur 6.

Par exemple, les machines virtuelles 8 peuvent être empêchées d'accéder à une ressource matérielle 7 du serveur 6 par l'intermédiaire d'un ou de plusieurs composants logiciels de la couche logicielle de virtualisation 12 (module de sécurité 26) dont le rôle est d'assurer un cloisonnement logiciel entre les machines virtuelles 8 et vis-à-vis de la couche logicielle de virtualisation 12 et de superviser les accès auxdites ressources. Ces fonctions peuvent, par exemple, être implémentées par l'hyperviseur 22 et/ou par des interfaces logicielles telles que le module « libvirt ».

D'autres moyens de cloisonnement peuvent être mis en oeuvre.

Par exemple, la commutation de paquets IP peut être virtualisée et assurée par un module réseau dédié (le module 24) tel que l'outil Open vSwitch (OVS). Les flux de paquets IP peuvent être isolés au sein de la couche logicielle de virtualisation 12 par un outil dédié d'accélération de paquets IP tel que l'outil DPDK.

Il est entendu que ces exemples ne sont pas limitatifs et que d'autres outils de même nature pourraient être utilisés pour aboutir à des fonctionnalités similaires.

En plus, les mécanismes de partages de ressources physiques assurés par des outils standard de la couche logicielle de virtualisation 12 peuvent être inhibés pour qu'aucun périphérique physique ne soit directement mis à disposition des machines virtuelles, et que, pour les machines virtuelles 8, l'usage des périphériques physiques passe par un intermédiaire logiciel.

Par exemple, pour les interfaces réseaux, les machines virtuelles 8 ont accès à des ports logiciels virtuels rattachables à des passerelles OVS, de sorte qu'aucune interface réseau physique n'est directement mise à disposition des machines virtuelles.

En revanche, la machine virtuelle 10 dite de confiance est, par exception, autorisée à accéder directement à au moins une ressource du serveur 6, telle qu'une ressource matérielle 7, comme par exemple une interface réseau. Dans certains cas, ladite ressource correspond au fonctionnalités de gestion (module 14) précédemment mentionnées. Plus précisément, la machine virtuelle de confiance 10 dispose d'un accès exclusif à au moins une ressource matérielle unique du serveur 6 identifiée au préalable lors de la création de la machine virtuelle.

De préférence, la liste qui identifie les ressources du serveur 6 que la machine virtuelle 10 de confiance peut utiliser directement est dressée par un intégrateur responsable de créer la machine virtuelle 10.

Par exemple, la machine virtuelle de confiance 10 comporte une déclaration (une liste ou un manifeste implémentée par toute structure de données appropriée) qui identifie la ou les ressources du serveur 6 (qu'il s'agisse de ressources matérielles 7 ou de la ressource logicielle) que la machine virtuelle de confiance 10 est autorisée à accéder directement. Dans la suite, ces ressources matérielles auxquelles la machine virtuelle 10 peut accéder directement sont dénommées « ressources autorisées ».

Lors de l'installation de la machine virtuelle de confiance 10 par un administrateur dédié dans l'infrastructure de virtualisation 4 du serveur 6, ces droits d'accès sont validés par l'administrateur. Par exemple, l'installation de la machine virtuelle 10 vaut acceptation par l'administrateur local des droits d'accès aux ressources autorisées.

Selon les modes de réalisation, les accès aux ressources autorisées peuvent être un accès exclusif dans le cas de ressources non partageables avec d'autres machines virtuelles, telle qu'un contrôleur USB ou une page mémoire. En d'autres termes, seule une machine virtuelle de confiance 10 est autorisée à accéder à une ressource spécifique du serveur 6. Dans d'autres cas, l'accès aux ressources autorisées peut être un accès non exclusif lorsqu'il s'agit de ressources partageables avec les autres machines virtuelles, par exemple lorsque la ressource est un générateur d'aléa. En d'autres termes, plusieurs machines virtuelles de confiance 10 peuvent, simultanément ou à tour de rôle, accéder à la ressource spécifique mutualisée du serveur 6.

Par exemple, la couche logicielle de virtualisation 12 peut être configurée pour ouvrir un accès aux ressources autorisées pour la ou les machines virtuelles de confiance 10 en activant, sur l'hyperviseur, pour ces fonctions uniquement, grâce à une unité de gestion de mémoire d'entrée-sortie 28 (IOMMU, pour « input-output memory management unit » en anglais) permettant d'ouvrir un accès exceptionnel à la ressource ou aux ressources. Le recours aux fonctions de gestion de mémoire d'entrée-sortie (IOMMU) pour réguler l'accès des machines virtuelles de confiance 10 aux ressources autorisées permet d'assurer cet accès de façon sécurisée. D'autres implémentations sont néanmoins possibles, cet exemple n'étant pas limitatif.

En parallèle, l'hyperviseur peut être configuré pour exercer un contrôle des demandes d'accès à des ressources autorisées effectuées par les machines virtuelles 10 et accepter ces demandes ou, au contraire, refuser ces demandes selon les circonstances.

De préférence, les demandes d'autorisation d'accès lors de l'exécution des machines virtuelles 10 sont faites par un compte utilisateur ayant un rôle différent de celui du compte qui démarre les machines virtuelles. A cet effet, la couche logicielle de virtualisation 12 comporte un module de gestion des utilisateurs.

De plus, le contrôle de la couche logicielle de virtualisation 12 n'est pas directement exposé aux machines virtuelles 10. Pour gérer les machines virtuelles hébergées sur l'infrastructure de virtualisation 4, un administrateur sera limité à la possibilité de fournir un manifeste listant les ressources demandées pour une machine virtuelle donnée. C'est l'hyperviseur qui déterminera ensuite lors de l'exécution si ces ressources peuvent ou non être mises à disposition des machines virtuelles demandeuses à chaque instant.

De préférence, la liste des ressources autorisées n'est pas modifiable une fois que la machine virtuelle 10 a été créée.

Par exemple, le fichier d'image disque contenant la machine virtuelle 10 n'est pas modifiable une fois qu'il a été créé. Pour détecter toute modification non autorisée entre le moment où la machine virtuelle 10 est créée et le moment où elle est installée dans l'infrastructure de virtualisation 4, le fichier d'image disque contenant la machine virtuelle 10 peut être signé numériquement, par exemple au moyen d'un certificat de sécurité. En variante, l'intégrité du fichier peut être vérifiée au moyen d'une somme de contrôle.

Pour empêcher toute modification non autorisée une fois que la machine virtuelle 10 est installée dans l'infrastructure de virtualisation 4, le fichier d'image disque contenant la machine virtuelle 10 correspondant peut être placé en lecture seule. Ce sont alors des fonctions de gestion des fichiers propres au système d'exploitation ou à l'infrastructure de virtualisation 4 qui empêchent de modifier le fichier d'image disque contenant la machine virtuelle 10.

Le code logiciel permettant d'implémenter l'infrastructure de virtualisation 4 peut aussi être placé en lecture seule de manière à ne pas être modifiable.

D'autres solutions peuvent être utilisées, alternativement ou en complément avec celles décrites ci-dessus, afin d'empêcher toute modification non autorisée de la machine virtuelle 10 dans l'infrastructure de virtualisation 4.

Par exemple, la machine virtuelle 10 est stockée dans une mémoire ou dans un support de stockage chiffré. Selon un autre exemple, le démarrage de l'infrastructure de virtualisation 4 et/ou du système d'exploitation du serveur 6 est réalisé de façon sécurisée, par exemple au moyen d'informations de chiffrement.

Dans le cas où une modification non autorisée ou une tentative non autorisée de modification de la machine virtuelle 10 est détectée, alors une alarme peut être émise à destination d'un utilisateur ou d'un administrateur ou à destination de l'intégrateur qui a créé la machine virtuelle 10. En variante, la machine virtuelle 10 peut aussi être neutralisée, ou au moins limiter son accès aux ressources du serveur 6, par exemple en refusant des demandes visant à accéder aux ressources autorisées.

L'invention permet d'offrir à des intégrateurs de confiance les moyens de produire et de déployer facilement et de manière sécurisé des noeuds réseau virtualisés avec des machines virtuelles (de type KVM par exemple). L'infrastructure de virtualisation 4 permet d'accueillir de façon sécurisée une machine virtuelle 10 possédant un accès privilégié à au moins une ressource à accès limité du serveur 6.

L'invention permet d'assurer une sécurité satisfaisante du système de virtualisation, tout en répondant aux besoins opérationnels des utilisateurs du système.

Par exemple, le système informatique 2 est conforme aux recommandations de l'Agence Nationale de la Sécurité des Systèmes d'information (ANSSI, France), telle que le Référenciel Général de Sécurité, Annexe B2 (RGS-Annexe B2) ou le référentiel « Problématiques de sécurité associées à la virtualisation d'un système d'information », DAT-NT-011/ANSSI/SDE/NP.

En d'autres termes, le serveur informatique 6 est alors adapté pour mettre en oeuvre un procédé de gestion de la pluralité de machines virtuelles 8, 10, comprenant les étapes suivantes, non représentées :
- créer la couche logicielle de virtualisation 12 formant un environnement d'exécution pour les machines virtuelles 8, 10 ;
- autoriser sélectivement au moins une des machines virtuelles, dite machine virtuelle de confiance 10, à accéder directement à au moins une ressource du serveur informatique, les autres machines virtuelles 8 n'étant pas autorisées à accéder directement aux ressources matérielles 7 du serveur informatique 6, et ne pouvant accéder qu'à des ressources correspondantes virtualisées par l'intermédiaire de la couche logicielle de virtualisation 12 ; et
- exécuter les machines virtuelles 8, 10 via la couche logicielle de virtualisation 12.

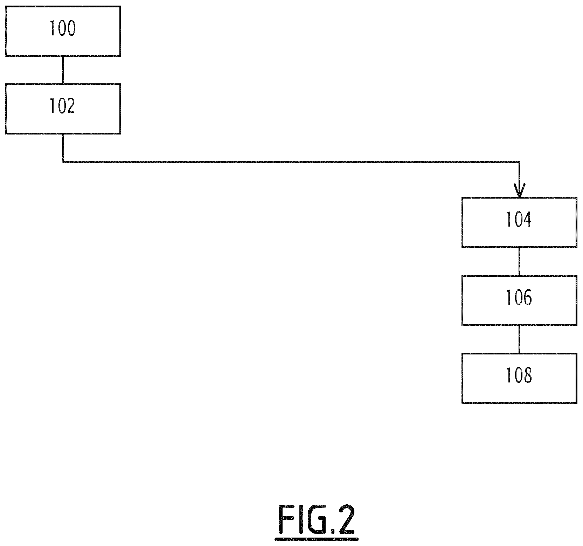

La figure 2 représente un exemple de mise en oeuvre de l'invention.

Par exemple, au moins une partie des étapes du procédé de l'invention sont mises en oeuvre par le processeur du serveur 6 au moyen du programme informatique.

Le procédé débute lors de la création de la machine virtuelle 10 de confiance.

Initialement, lors d'une étape 100, l'intégrateur chargé de créer la machine virtuelle 10 de confiance déclare quelles sont les ressources protégées auxquelles la machine virtuelle 10 de confiance pourra accéder (les « ressources autorisées » mentionnées ci-dessus).

Les informations d'identification correspondantes, qui comportent par exemple un ou plusieurs identifiants, telles que des adresses PCI ou tout autre identifiant électronique approprié, sont enregistrées dans une structure de données qui est de préférence intégrée à l'intérieur de la machine virtuelle 10, c'est-à-dire dans le fichier d'image disque contenant la machine virtuelle 10.

Par exemple, ces informations d'identification sont acquises auprès dudit intégrateur au moyen d'un outil informatique de conception et sont automatiquement enregistrées dans le support de données, de préférence à l'intérieur de la machine virtuelle 10. L'outil informatique de conception peut être exécuté sur un terminal informatique distinct du serveur 6.

Puis, lors d'une étape 102, la machine virtuelle 10 de confiance est créée.

Par exemple, un outil informatique génère automatiquement le fichier d'image disque contenant la machine virtuelle 10, ce fichier contenant le support de données incluant les informations d'identification.

En pratique, la machine virtuelle 10 peut être crée par une entité (administrative ou autre) différente de l'intégrateur. Par exemple, dans certains cas, pour créer la machine virtuelle 10, une machine virtuelle créée préalablement est réceptionnée par l'intégrateur, ce dernier se contentant alors de modifier la machine virtuelle pour y ajouter les informations d'identification pour créer la machine virtuelle de confiance 10.

Les données, ou informations, d'identification associées à la machine virtuelle de confiance 10, sont modifiables seulement lors de la production logicielle, c'est-à-dire lors de la création des machines virtuelles 8, 10, et ne sont ensuite pas modifiables lors de l'exécution desdites machines virtuelles 8, 10.

Lors d'une étape 104, la machine virtuelle 10 de confiance créée est déployée sur le serveur 6.

A titre d'exemple, l'installation de la machine virtuelle 10 sur l'infrastructure de virtualisation 4 est réalisée au moyen d'un outil informatique d'installation pouvant être opéré par un administrateur local. L'outil informatique d'installation peut être exécuté sur un terminal informatique distinct du serveur 6 mais connecté au serveur 6.

La machine virtuelle 10 est automatiquement reçue, par exemple au moyen d'une liaison de communication ou depuis un support de stockage de données. Puis, la machine virtuelle 10 est installée dans l'infrastructure de virtualisation 4, de préférence aux côtés d'autres machines virtuelles 8 standard.

Lors de l'installation, l'administrateur local peut contrôler et valider la liste de ressources autorisées pour la machine virtuelle 10. Cette vérification peut être réalisée au moyen de l'outil informatique d'installation.

L'infrastructure de virtualisation 4 est ensuite démarrée.

Lors d'une étape 106, au cours du fonctionnement de l'infrastructure de virtualisation 4, la machine virtuelle 10 envoie une demande d'accès à une ressource autorisée.

En réponse, la couche logicielle de virtualisation 12 analyse automatiquement cette demande d'accès et détermine si la machine virtuelle 10 de confiance peut accéder à la ressource demandée. Cette analyse peut, au moins en partie, être réalisée par l'hyperviseur de la couche logicielle de virtualisation 12.

Si la couche logicielle de virtualisation 12 détermine que la machine virtuelle 10 de confiance peut accéder à la ressource demandée, alors, dans une étape 108, la couche logicielle de virtualisation 12 ouvre un accès permettant à la machine virtuelle 10 d'accéder à la ressource demandée.

Dans le cas contraire, si la couche logicielle de virtualisation 12 détermine que la machine virtuelle 10 de confiance ne peut pas accéder à la ressource demandée, par exemple parce que la ressource demandée ne figure pas dans la liste de ressources autorisées qui est associée à la machine virtuelle 10 de confiance, ou parce que l'hyperviseur détermine que la ressource est aussi non partageable, alors aucun tel accès n'est ouvert.

En parallèle, la couche logicielle de virtualisation 12 interdit aux machines virtuelles 8 ordinaires d'accéder directement auxdites ressources du serveur 6.

De nombreux autres modes de réalisation sont possibles.

En particulier, l'exemple décrit ne fait pas obstacle à ce que, dans d'autres modes de réalisation, d'autres étapes soient mises en oeuvre conjointement et/ou séquentiellement avec les étapes décrites. En variante, les étapes pourraient être exécutées dans un ordre différent. Certaines étapes pourraient être omises.

Toute caractéristique de l'un des modes de réalisation ou variante décrite ci-dessus, peut être mise en oeuvre dans les autres modes de réalisation et variantes décrits.

## Revendications

1. Infrastructure logicielle de virtualisation (4) pour accueillir une pluralité de machines virtuelles (8, 10) sur un serveur informatique (6), l'infrastructure logicielle de virtualisation comportant une couche logicielle de virtualisation (12) formant un environnement d'exécution pour les machines virtuelles et étant configurée pour autoriser sélectivement au moins une des machines virtuelles, dite machine virtuelle de confiance (10), à accéder exclusivement à au moins une ressource du serveur informatique, dite(s) ressource(s) autorisée(s), identifiée(s) par des informations d'identification lors de la création de ladite machine virtuelle ; les autres machines virtuelles (8) n'étant pas autorisées à accéder directement aux ressources matérielles (7) du serveur informatique (6), et ne pouvant accéder qu'à des ressources correspondantes virtualisées par l'intermédiaire de la couche logicielle de virtualisation (12).

2. Infrastructure logicielle de virtualisation (4) selon la revendication 1, dans laquelle ladite au moins une ressource du serveur informatique est une ressource matérielle (7) ou logicielle et comporte un ou plusieurs des éléments suivants : un port de communication, un contrôleur USB, une interface réseau, un générateur d'aléa, un module matériel de sécurité, une carte d'extension, un modem, une carte d'acquisition de données, un récepteur de géolocalisation, un processeur graphique, un processeur spécialisé de traitement de signal.

3. Infrastructure logicielle de virtualisation (4) selon l'une quelconque des revendications précédentes, dans laquelle ladite au moins une ressource du serveur informatique est un module de gestion (14) de l'infrastructure de virtualisation.

4. Infrastructure logicielle de virtualisation (4) selon l'une quelconque des revendications précédentes, dans laquelle les données d'identification associées à la machine virtuelle de confiance (10) ne sont pas modifiables lors de l'exécution des machines virtuelles (8, 10).

5. Infrastructure logicielle de virtualisation (4) selon l'une quelconque des revendications précédentes, dans laquelle la couche logicielle de virtualisation (12) est configurée pour virtualiser au moins une fonction parmi des fonctions réseau, des fonctions de sécurité, et des fonctions de communication sur le serveur informatique.

6. Produit programme d'ordinateur comportant un code informatique ou des instructions machine exécutables configuré pour, lorsqu'exécuté par un processeur d'un serveur informatique, mettre en oeuvre une infrastructure logicielle de virtualisation selon l'une quelconque des revendications 1 à 5.

7. Système informatique comportant un serveur informatique et une infrastructure logicielle de virtualisation selon l'une quelconque des revendications 1 à 5.

8. Procédé de déploiement d'une machine virtuelle dite de confiance (10) dans une infrastructure de virtualisation (4) selon l'une quelconque des revendications 1 à 5, le procédé comportant des étapes consistant à :
- par un outil informatique de conception d'un intégrateur, recevoir (100) des informations d'identification qui identifient une ou plusieurs ressources d'un serveur informatique (6) que la machine virtuelle de confiance est autorisée à accéder exclusivement lors de son exécution par l'infrastructure de virtualisation (4) ;
- par un outil informatique de conception, créer (102) ladite machine virtuelle, la machine virtuelle de confiance créée comportant les informations d'identification reçues ;
- par un outil informatique d'un administrateur du serveur informatique, recevoir (104) la machine virtuelle créée et installer sur le serveur informatique la machine virtuelle de confiance créée, l'infrastructure étant configurée pour, lors de l'exécution (106) de la machine virtuelle de confiance, sélectivement autoriser (108) la machine virtuelle de confiance à accéder exclusivement à au moins une desdites ressources matérielles du serveur, dite(s) ressource(s) autorisée(s), identifiée(s) par les informations d'identification.

9. Produit programme d'ordinateur comportant un code informatique ou des instructions machine exécutables configuré pour, lorsqu'exécuté par un processeur d'un serveur informatique, mettre en oeuvre un procédé selon la revendication précédente.
